# EUROPÄISCHE PATENTANMELDUNG

(11) **EP 1 721 806 A2**
(43) Veröffentlichungstag der Anmeldung: **15.11.2006**
(21) Anmeldenummer: 06113885.5
(22) Anmeldetag: 12.05.2006
(51) Int. Cl.: B62D 1/19

(54) **Anordnung einer Lenksäule**

(30) Priorität: 14.05.2005 DE 102005022408
(71) Anmelder: ZF Lenksysteme GmbH, 73527 Schwäbisch Gmünd (DE)
(72) Erfinder: Heintschel, Manfred, 73525 Schwäbisch Gmünd (DE); Dieterle, Günter, 73547 Lorch (DE)

(57) **Zusammenfassung**

Im Falle eines Frontalaufpralles der Fahrerkabine eines Kraftfahrzeuges soll die Lenksäule eine andere Lage (Schutzstellung S) einnehmen als die Gebrauchslage (G). Dafür ist die Geometrie der Anordnung derart gestaltet, dass bei Vorwärtsfahrt im Falle eines Frontalaufpralles das obere Gehäuse (4) der Lenksäule eine Kippbewegung ausführen kann, damit die Lenkspindel (5) die Schutzstellung (S) einnehmen kann, bei welcher die Neigung der Lenkspindel (5) stärker der Horizontalen angenähert ist als in der Gebrauchslage (G). Ein erstes Führungsmittel (9) für die Kippbewegung ist bekannt.
Erfindungsgemäß ist als zweites Führungsmittel zur Erzwingung der Kippbewegung eine Kombination einer Führungsfläche (11) mit einem Führungskörper (10) vorgesehen.

## Beschreibung

Die Erfindung betrifft eine Anordnung nach dem Oberbegriff des Anspruchs 1.

Eine solche Anordnung ist beschrieben in den Patentschriften US 4,365,825 und DE 28 09 664 C2. Dabei ist eine Lenkspindel in der Koppel eines Lenkergetriebes gelagert (das in anderer Literatur auch als Getriebekette, insbesondere Vierdrehgelenkkette bezeichnet wird, siehe "Feinmechanische Bauelemente" von Prof. Siegfried Hildebrand, Carl Hanser Verlag, München, Abschnitt 3.4.5.1). Der Sinn dieser bekannten Konstruktion besteht darin, eine Anordnung einer Lenksäule mit Lenkrad anzugeben, bei der im Falle einer Fahrzeugverzögerung bei einem frontseitigen Kollisionsfall das Lenkrad zwangsweise ohne aktives Zutun durch den Körper des Fahrers so verlagert wird, dass es selbst in wirksamer Weise eine Schutzfunktion erfüllen kann. Dabei führt das Lenkrad im Falle eines Frontalaufpralles augenblicklich zwei einander überlagerte Bewegungen gleichzeitig selbsttätig aus, wobei es sowohl in Richtung Armaturenbrett, also vom Fahrer weg verlagert wird als auch aus der nahezu horizontalen Gebrauchsstellung in eine eher vertikale Schutzstellung überführt wird.

Außerdem ist es bekannt (DE 29 08 906 A1), ein Lenkrad mit Hilfe eines Lenkergetriebes in verschiedenen Neigungsstellungen einzustellen. Dabei sind zwei Lenker, die durch eine Koppel gelenkig miteinander verbunden sind, an der Stirnwand einer Fahrerkabine angelenkt. In der Koppel ist eine teleskopartig ausgebildete Lenkspindel drehbar gelagert. Die Neigung eines von zwei Lenkern ist in Stufen einstellbar. Die steilste der Lenkradstellungen (das entspricht der flachsten Lenkspindelneigung) ist bei dieser Konstruktion als bequeme Aussteigestellung vorgesehen. Durch die teleskopartig ausgebildete Lenkspindel ist das Lenkrad längs seiner Lenksäulenachse gegenüber der Koppel verschiebbar.

Es ist Aufgabe der Erfindung, eine Anordnung einer Lenksäule zu schaffen, die im Falle eines Frontalaufpralles in wirksamer Weise eine Schutzfunktion für den Fahrer erfüllt.

Diese Aufgabe wird gelöst durch eine Anordnung mit den Merkmalen des Patentanspruchs 1. Kurz gefasst handelt es sich dabei um eine Anordnung einer Lenksäule eines Kraftfahrzeuges, bei der sich im Falle eines Frontalaufpralles der Fahrerkabine eine Lenkspindel in eine andere Lage bewegen kann als im Gebrauchzustand. Dabei ist die Lenkspindel drehbar in einem oberen Gehäuse der Lenksäule und in einer Bewegungsebene gelagert, die sich in Fahrtrichtung erstreckt. Die Geometrie der Anordnung ist derart gestaltet, dass bei Vorwärtsfahrt im Falle eines Frontalaufpralles das obere Gehäuse eine Kippbewegung in der Bewegungsrichtung ausführen kann, damit die Lenkspindel eine Schutzstellung einnehmen kann, bei welcher die Neigung der Lenkspindel stärker der Horizontalen angenähert ist als in der Gebrauchslage. Um nun eine Anordnung zu schaffen, die bei Frontalaufprall wirksam eine Schutzfunktion für den Fahrer erfüllt, ist zusätzlich zu einem ersten Führungsmittel für die Kippbewegung als zweites Führungsmittel zur Erzwingung der Kippbewegung eine Kombination einer Führungsfläche mit einem Führungskörper vorgesehen.

Dies kann in vorteilhafter Weise zu einer Vereinfachung der Konstruktion und/oder zur Einsparung von Einzelteilen führen.

Dabei ist von der Überlegung ausgegangen geworden, dass bei einer Lenksäule, die im Falle eines Frontalaufpralles eine Schutzfunktion erfüllen soll, das Lenkrad im Falle des Frontalaufpralles nicht zu tief in Richtung auf den Fahrersitz geschwenkt werden darf; denn dort könnte es zu Beinverletzungen kommen. Durch die Erfindung lassen sich Verletzungen vermeiden, da sich die Führungsfläche in geeigneter Weise gestalten lässt. Zudem kann darauf geachtet werden, dass der Abstand zwischen Lenkrad und oberem Gehäuse gering (insbesondere kleiner als 20 cm) gehalten wird.

Vorteilhafte Ausführungsformen einer erfindungsgemäßen Anordnung sind in den Unteransprüchen angegeben. Die Veränderung der Winkellage des Lenkrades im Falle eines Frontalaufpralls wird durch eine Einrichtung knapp unter dem Lenkrad bewerkstelligt. Dies kann beispielsweise mit Hilfe von Pyrotechnik erreicht werden, was aber relativ teuer und aufwändig ist. Die Funktion kann aber auch rein mechanisch erzielt werden; dabei wird die Schwenkachse der "Knickeinrichtung" so gewählt, dass dieser höher als ihr Massenschwerpunkt liegt. Durch zusätzliche Führungsflächen (in Führungsschlitzen) im unteren Gehäuse wird die Winkellage des Lenkrades auf einer vorher definierten Bahn verändert und das Lenkrad "knickt" nach unten ab.

Durch den bei dieser Konstruktion definierten Schwerpunkt ist sicher gestellt, dass das Lenkrad in sich selbst schwenkt und nicht nach unten weg schwenkt; denn beim nach unten Schwenken würde das Lenkrad dem Fahrer auf die Beine schlagen und Verletzungen im Bereich der Oberschenkel hervorrufen.

Durch eine zusätzliche, kraftschlüssige (reibschlüssige) Verbindung der Lenksäule mit der Fahrerkabine kann vermieden werden, dass die Lenksäule in die Fahrerkabine eindringt, wenn - bedingt durch einen Frontalaufprall - die so genannte Firewall (Brandschutzwand) in den Innenraum der Fahrerkabine gedrückt wird. Dadurch wird der Überlebensraum für den Fahrer weiter positiv beeinflusst. Dies kann dadurch erreicht werden, dass die Befestigungselemente der Lenksäule zur Fahrerkabine mit Langlöchern ausgestattet sind. Die Vorspannkraft der zugehörigen Schrauben wird so gewählt, dass diese der normalen Belastung im Alltagsbetrieb Stand halten. Nur bei einem Frontalaufprall wird die komplette Lenksäule durch ihr Eigengewicht und die Massenträgheit in diesen Langlöchern abwärts bewegt.

Als besonders vorteilhaft hat es sich erwiesen, wenn die Geometrie der Lenksäule (insbesondere von oberem Gehäuse mit Lenkspindel und Lenkrad), deren Massenverteilung und die Klemmkräfte (mit denen das obere Gehäuse in der Gebrauchslage gehalten wird) derart gewählt sind, dass im Falle eines Frontalaufpralles die Lenkspindel die Schutzstellung allein schon mit Hilfe der auftretenden Massenträgheitskräfte einnimmt, welche diejenigen Teile der Lenksäule ausüben, die beim Übergang in die Schutzstellung unter Mitwirkung der Führungsfläche zu bewegen sind, die also weniger verzögert werden sollen als die kollidierenden Teile der Fahrerkabine.

Zusätzlich kann die Lenkspindel derart durch das im obere Gehäuse gelagert sein, dass sie für ihre Gebrauchslage in ihrer Neigung einstellbar ist.

Arretierungsmittel für die Einstellung der Höhe und/oder Neigung der Lenkspindel können vorgesehen und über einen Handhabe oder ein Pedal lösbar sein.

Bei einer besonders vorteilhaften Ausführungsform weist das erste Führungsmittel einen Lenker auf, dessen oberer Bereich mit dem oberen Gehäuse über ein Scharniergelenk verbunden ist, während er in seinem unteren Bereich über ein Lenkergelenk an einem unteren Gehäuse angelenkt ist, das im ungestörten Fahrbetrieb fest mit der Fahrerkabine verbunden ist.

Dabei soll das Scharniergelenk in Fahrtrichtung vor der Lenkspindel und über dem Massenschwerpunkt derjenigen Teile liegen, die im Falle eines Frontalaufpralles weniger verzögert werden als die kollidierenden Teile der Fahrerkabine.

Der Führungskörper ist im ungestörten Fahrbetrieb bevorzugt hinter der Lenkspindel angeordnet, wobei er auf der Führungsfläche derart geführt ist, dass bei Vorwärtsfahrt im Falle eines Frontalaufpralles die Lenkspindel selbsttätig in die Schutzstellung geneigt wird.

Was die zweiten Führungsmittel betrifft, so kann entweder der Führungskörper oder die Führungsfläche mit dem oberen Gehäuse verbunden sein.

Damit sich auch noch eine Höhenverstellbarkeit der Lenkspindel gewährleisten lässt, kann für das untere Gehäuse eine Führungsbahn an einem Lagerbock vorgesehen sein, das damit bezüglich der Fahrerkabine höhenverstellbar ist. Zur Arretierung kann das untere Gehäuse mit einem im ungestörten Fahrbetrieb festsitzenden Fahrzeugteil (beispielsweise Lagerbock) über eine Feststellvorrichtung (beispielsweise Klemmvorrichtung) verbunden sein. Gemäß einer Weiterbildung kann eine solche Feststellvorrichtung im Falle eines Frontalaufpralles eine Abwärtsbewegung des festsitzenden Fahrzeugteils zulassen.

Unter Ausnutzung von Konstruktionen, wie sie zur Höheneinstellung von Lenksäulen von Nutzkraftfahrzeugen üblich sind, kann bevorzugt ein Lagerbock vorgesehen sein, der das Lenkergelenk mittelbar oder unmittelbar trägt und der im ungestörten Fahrbetrieb fest mit der Fahrerkabine verbunden ist; er kann wenigstens eine Führungsbahn als Teil von Einstellmitteln für eine Höhenverlagerung des Lagerbocks aufweisen. Der Lagerbock kann im Falle eines Frontalaufpralles durch Trägheitskräfte in Fahrtrichtung verschiebbar sein.

Eine Alternative besteht darin, dass der Führungskörper im ungestörten Fahrbetrieb vor der Lenkspindel angeordnet ist, wobei er auf der Führungsfläche derart geführt ist, dass bei Vorwärtsfahrt im Falle eines Frontalaufpralles die Lenkspindel in die Schutzstellung geneigt wird. Dabei kann entweder der Führungskörper oder die Führungsfläche mit dem oberen Gehäuse verbunden sein.

Anhand von wenigstens einem Ausführungsbeispiel wird die Erfindung nun näher erläutert. Dabei deuten gleiche Bezugszeichen in unterschiedlichen Figuren auf einander entsprechende Teile und/oder Funktionen hin.

Es zeigen schematisch:

Figur 1: eine Gegenüberstellung einer Gebrauchslage und einer unvorteilhaften Schutzstellung eines Lenkrades (Stand der Technik),

Figur 2: ein Ausführungsbeispiel einer erfindungsgemäßen Anordnung in Gebrauchslage,

Figur 3: dasselbe Ausführungsbeispiel in seiner Schutzstellung,

Figur 4: eine Gegenüberstellung der Gebrauchslage nach Figur 2 und der Schutzstellung nach Figur 3,

Figur 5: ein anderes Ausführungsbeispiel.

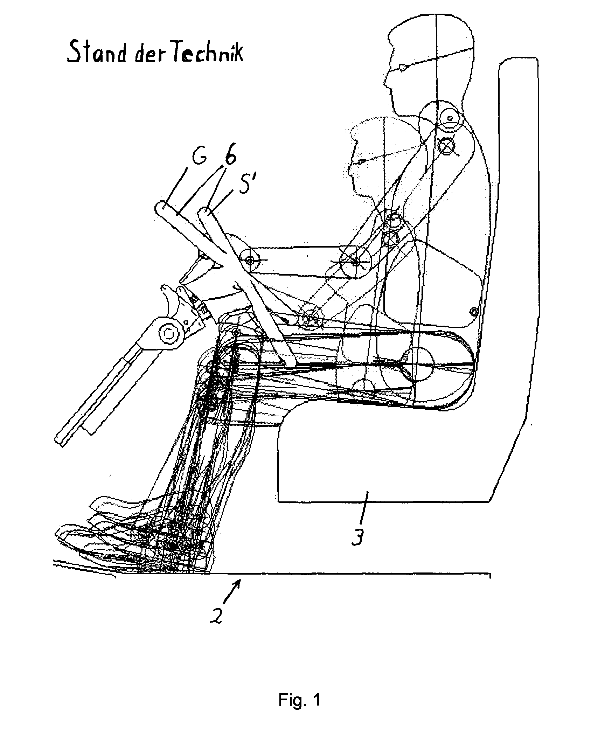

Figur 1 zeigt in einer Fahrerkabine 2 auf einem Fahrersitz 3 zwei Fahrer unterschiedlicher Körpergröße, die ein Lenkrad 6 einmal in der Gebrauchslage G und ein andermal in einer herunter gekippten Schutzstellung S' halten, wobei sich zeigt, dass das einfache Herunterkippen des Lenkrades 6 im Falle eines Frontalaufpralles zu Beinverletzungen führen kann. Insofern ist die hier gezeigte Schutzstellung S' nicht brauchbar, sondern verbesserungsbedürftig.

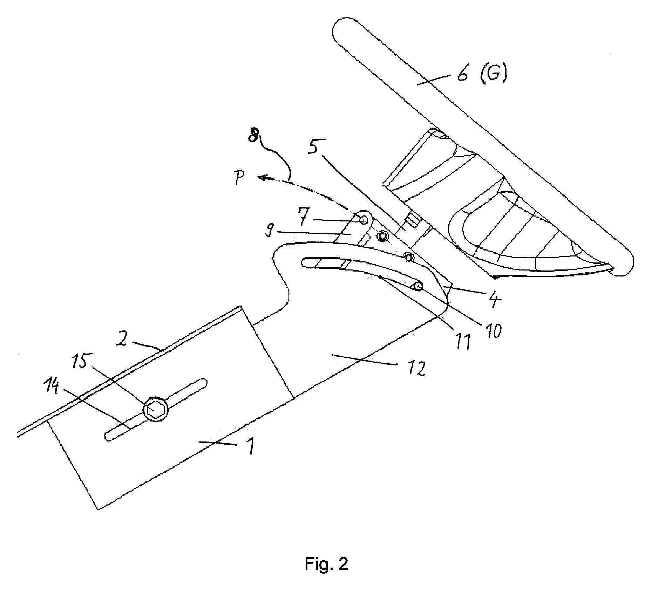

In Figur 2 ist eine erfindungsgemäße Anordnung einer Lenksäule (in Gebrauchslage G) dargestellt, die in einem Lagerbock 1 gehalten ist, der an einem Teil einer Fahrerkabine 2 eines (Nutz-)Kraftfahrzeuges befestigt ist. In einem oberen Gehäuse 4 ist eine Lenkspindel 5 drehbar gelagert, die ein Lenkrad 6 trägt.

Das obere Gehäuse 4 weist ein Scharniergelenk 7 auf, das mit einem Lenker 9 verbunden ist. Einen entsprechenden zweiten Lenker muss man sich unterhalb der Zeichenebene und parallel zu dieser verlaufend vorstellen.

Die Lenkspindel 5 ist mit einer hier nicht dargestellten und nach unten führenden Lenkwelle über ein Gelenk verbunden, das unweit des oberen Gehäuses 4 vorgesehen ist. Der Lagerbock 1 weist in einem Führungsschlitz eine Führungsbahn 14 für ein Führungselement 15 (hier: Schraube für Klemmverbindung) auf, das an einem unteren Gehäuse 12 befestigt ist, womit eine Höheneinstellbarkeit des unteren Gehäuses 12 und damit auch des oberen Gehäuses 4 und der Lenksäule erreichbar ist. Das Arretieren kann in bekannter Weise (siehe beispielsweise DE 195 45 438 oder DE 101 56 327) durch Festspannen des unteren Gehäuses 12 am Lagerbock 1 erfolgen.

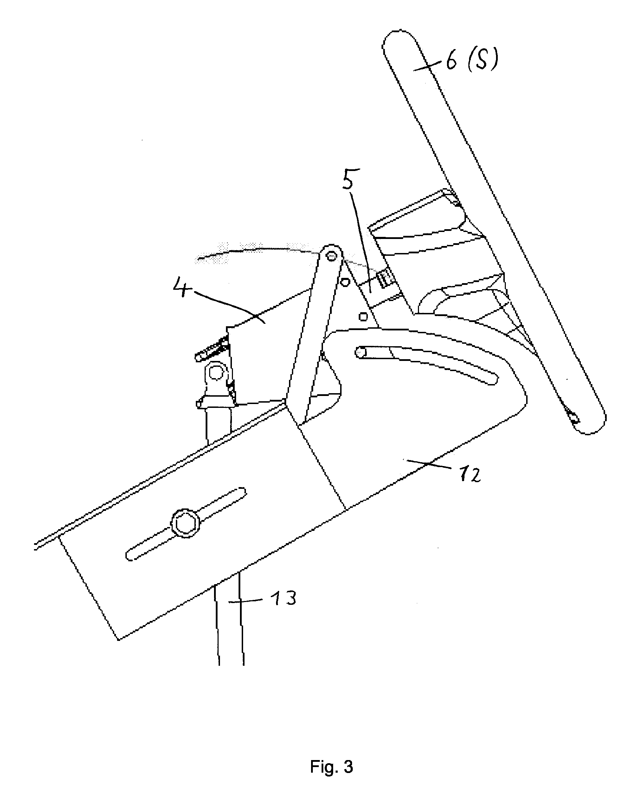

Die Geometrie und Massenverteilung der Lenksäule ist derart gewählt, dass bei Vorwärtsfahrt und einem Frontalaufprall das obere Gehäuse 4 selbsttätig in Fahrtrichtung geschleudert wird, wobei sich das Scharniergelenk 7 auf einer Kreisbahn 8 in Richtung des Pfeiles P bewegt. Dabei gleitet ein Führungskörper 10, der als Führungsstift ausgebildet und am oberen Gehäuse 4 befestigt ist, auf einer Führungsfläche 11, die sich in einem unteren Gehäuse 12 befindet und so geformt ist, dass das obere Gehäuse 4 die in Figur 3 dargestellte Schutzstellung S einnimmt, bei der die Lenkspindel 5 ihre Neigung selbsttätig verstärkt der Horizontalen annähert, so dass das Lenkrad 6 eine steilere Lage (Schutzstellung S) einnimmt, die ungefähr parallel zur verletzungsgefährdeten Brust eines Fahrers verläuft.

Damit das aber nicht auch im ungestörten Betrieb (Normalbetrieb, Fahrbetrieb) geschieht, sollte für die Gebrauchslage G (Figur 2) eine kraftschlüssige Verbindung mit definierter Reibkraft zwischen den Teilen 4 und 12 oder aber eine Einrastung vorgesehen sein, die nur im Falle eines Frontalaufpralles überwunden werden. Zur Einrastung ist eine federbelastete Sperrklinke geeignet (siehe beispielsweise Figur 3 der deutschen Patentanmeldung 10 2005 016 789.6), die im ungestörten Betrieb aus dem oberen Gehäuse 4 in eine Vertiefung oder Ausnehmung des unteren Gehäuses 12 ragt. Wird im Falle eines Frontalaufpralles das untere Gehäuse 4 mit dem Lenkrad 6 nach vorne (also in Fahrtrichtung) geschleudert, so kann die Sperrklinke nach Überwindung einer geeignet bemessenen Druckkraft einer Feder die Vertiefung bzw. Ausnehmung verlassen, weil eine Seite der Sperrklinke und der Vertiefung bzw. Ausnehmung in geeigneter Weise schräg verlaufen.

In Figur 3 ist auch die Lenkwelle 13 dargestellt, die in Figur 2 nicht gezeigt ist und die über ein Wellengelenk mit der Lenkspindel 5 verbunden ist, das bei dem oberen Gehäuse (4) vorgesehen ist.

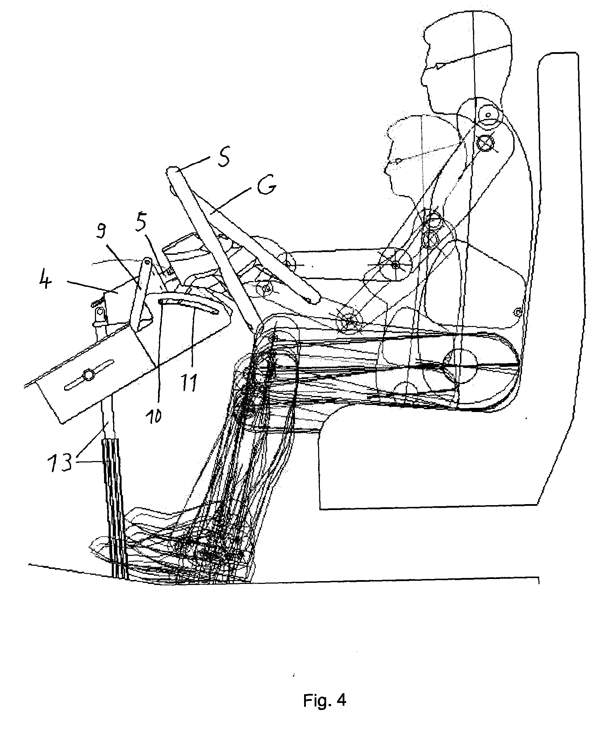

Figur 4 zeigt die eine Gegenüberstellung der Gebrauchslage G nach Figur 2 und der Schutzstellung S nach Figur 3. Im Vergleich zu Figur 1 liegt in Figur 4 die Schutzstellung des Lenkrades höher, so dass die Gefahr von Beinverletzungen weniger besteht, aber auch Brust- und Bauchverletzungen durch das Lenkrad 6 vermieden werden..

Durch Einstellen der Länge des Lenkers 9 kann die Lenkspindel 5 in der Neigung einstellbar sein.

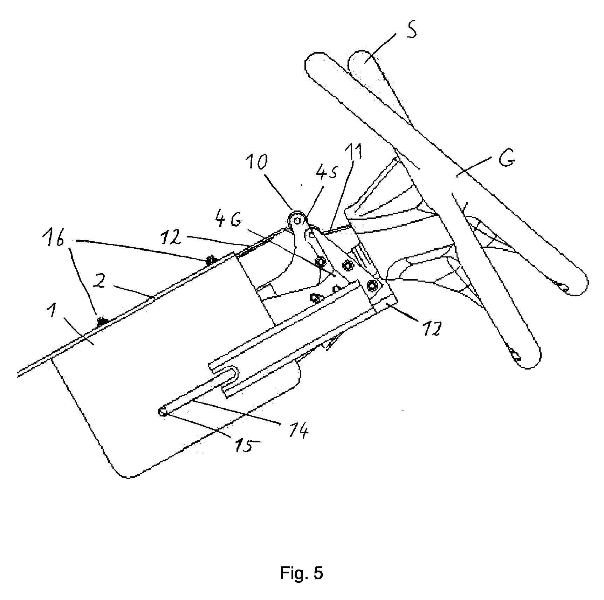

Bei dem in Figur 5 gezeigten Ausführungsbeispiel ist sowohl die Gebrauchslage G (Fahrposition) als auch die Schutzstellung S des Lenkrades gezeigt. Dem entsprechend ist auch das obere Gehäuse in zwei Stellungen 4G bzw. 4S dargestellt. Beim selbsttätigen Übergang (Kippbewegung) von der Gebrauchslage 4G in die Schutzstellung 4S rollt eine als Führungskörper 10 dienende Rolle auf einer Führungsfläche 11, die fest mit einem unteren Gehäuse 12 verbunden ist, das im Lagerbock 1 geführt und höheneinstellbar festgeklemmt ist. Der Führungskörper 10 und die Führungsfläche 11 bilden das zweite Führungsmittel für die Kippbewegung, während das erste Führungsmittel dadurch gebildet ist, dass das obere Gehäuse 4 innerhalb des Lagerbockes 1 an dem unteren Gehäuse 12 gelenkig befestigt ist.

Um die Höhenlage des unteren Gehäuses 12 einstellen zu können, weist dieses ein Führungselement 15 auf für eine Führungsbahn 14 in einem Führungsschlitz, der am Lagerbock 1 vorgesehen ist (vgl. auch die Figuren 2 und 3). Das Führungselement 15 kann in bekannter Weise Teil einer Klemmrichtung sein, die so konstruiert ist, dass im Falle eines Frontalaufpralls die Lenksäule der Verzögerung nicht Stand hält und das Lenkrad abwärts rutscht.

Für die Erfindung und alle dargestellten Ausführungsbeispiele gilt:
- Für die Einstellung des Lenkrades 6 in der Höhe können Befestigungs- und/oder Einstellmittel 16, beispielsweise Schrauben für eine Höhenver-lage-rung des gesamten Lagerbocks 1 gegenüber der Fahrerkabine 2 vorgesehen sein.
- Ferner kann im Falle eines Frontalaufpralles der Lagerbock 1 durch Trägheitskräfte in Fahrtrichtung verschiebbar sein, beispielsweise durch die Verwendung einer kraftschlüssigen (reibschlüssigen) Verbindung mit der Fahrerkabine 2.
- Bezüglich des Führungskörpers 10 und der Führungsfläche 11, aber auch bezüglich des Führungselementes 15 und der Führungsbahn 14 soll auch für die kinematische Umkehr Schutz beansprucht sein.

Bezugszeichenliste
1. Lagerbock
2. Fahrerkabine
3. Fahrersitz
4. oberes Gehäuse
5. Lenkspindel
6. Lenkrad
7. Scharniergelenk
8. Kreisbahn
9. Lenker
10. Führungskörper
11. Führungsfläche
12. unteres Gehäuse
13. Lenkwelle
14. Führungsbahn
15. Führungselement
16. Befestigungs- und/oder Einstellmittel

G Gebrauchslage

S' unbrauchbare Schutzstellung

S Schutzstellung

P Pfeil

## Patentansprüche

1. Anordnung einer Lenksäule, die in einer Fahrerkabine (2) eines Kraftfahrzeuges vorgesehen ist, das einen Fahrersitz (3) aufweist, und die im Falle eines Frontalaufpralles der Fahrerkabine eine andere Lage einnehmen kann als die Gebrauchslage, mit folgenden weiteren Merkmalen:
die Lenksäule weist in einem oberen Gehäuse (4) eine dort drehbar gelagerte Lenkspindel (5) auf, die zum Tragen eines Lenkrads (6) vorgesehen ist, die Geometrie der Anordnung ist derart gestaltet, dass bei Vorwärtsfahrt im Falle eines Frontalaufpralles das obere Gehäuse (4) eine Kippbewegung ausführen kann, damit die Lenkspindel (5) eine Schutzstellung (S) einnehmen kann, bei welcher die Neigung der Lenkspindel (5) stärker der Horizontalen angenähert ist als in der Gebrauchslage (G),es ist ein erstes Führungsmittel (9) für die Kippbewegung vorgesehen,**gekennzeichnet durch** folgende Merkmale:als zweites Führungsmittel ist zur Erzwingung der Kippbewegung eine Kombination einer Führungsfläche (11) mit einem Führungskörper (10) vorgesehen.

2. Anordnung nach Anspruch 1, **dadurch gekennzeichnet, dass** die Geometrie der Lenksäule, deren Massenverteilung und Klemmkräfte derart gewählt sind, dass im Falle eines Frontalaufpralles die Lenkspindel (5) die Schutzstellung (S) allein schon mit Hilfe der auftretenden Massenträgheitskräfte einnimmt, welche diejenigen Teile der Lenksäule ausüben, die beim Übergang in die Schutzstellung unter Mitwirkung der Führungsfläche (11) zu bewegen sind, die also weniger verzögert werden sollen als die kollidierenden Teile der Fahrerkabine.

3. Anordnung nach Anspruch 1 oder 2, **dadurch gekennzeichnet, dass** die Lenkspindel (5) für ihre Gebrauchslage (G) in ihrer Neigung einstellbar ist.

4. Anordnung nach einem der vorangehenden Ansprüche, **dadurch gekennzeichnet, dass** Arretierungsmittel für die Einstellung der Höhe und/oder Neigung der Lenkspindel (5) vorgesehen und über eine Handhabe oder ein Pedal lösbar sind.

5. Anordnung nach einem der vorangehenden Ansprüche, **dadurch gekennzeichnet, dass** das erste Führungsmittel einen Lenker (9) aufweist, dessen oberer Bereich mit dem oberen Gehäuse (4) über ein Scharniergelenk (7) verbunden ist, während er in seinem unteren Bereich über ein Lenkergelenk (11) an einem unteren Gehäuse (12) angelenkt ist, das im ungestörten Fahrbetrieb fest mit der Fahrerkabine (2) verbunden ist.

6. Anordnung nach Anspruch 5, **dadurch gekennzeichnet, dass** das Scharniergelenk (7) vor der Lenkspindel (5) und über dem Massenschwerpunkt derjenigen Teile liegt, die im Falle eines Frontalaufpralles weniger verzögert werden als die kollidierenden Teile der Fahrerkabine.

7. Anordnung nach Anspruch 5 oder 6, **dadurch gekennzeichnet, dass** der Führungskörper (10) im ungestörten Fahrbetrieb hinter der Lenkspindel (5) angeordnet ist, wobei er auf der Führungsfläche (11) derart geführt ist, dass bei Vorwärtsfahrt im Falle eines Frontalaufpralles die Lenkspindel (5) in die Schutzstellung (S) geneigt wird.

8. Anordnung nach Anspruch 7, **dadurch gekennzeichnet, dass** der Führungskörper (10) mit dem oberen Gehäuse (4) verbunden ist.

9. Anordnung nach Anspruch 7, **dadurch gekennzeichnet, dass** die Führungsfläche (11) mit dem oberen Gehäuse (4) verbunden ist.

10. Anordnung nach einem der vorangehenden Ansprüche, **dadurch gekennzeichnet, dass** sich ein Führungselement (15) an einem unteren Gehäuse (12) befindet, das bezüglich der Fahrerkabine(2) höhenverstellbar ist.

11. Anordnung nach Anspruch 10, **dadurch gekennzeichnet, dass** das untere Gehäuse (12) mit einem im ungestörten Fahrbetrieb festsitzenden Fahrzeugteil (1) über eine Feststellvorrichtung verbunden ist, die im Falle eines Frontalaufpralles eine Abwärtsbewegung des festsitzenden Fahrzeugteils (1) zulässt.

12. Anordnung nach Anspruch 5, **dadurch gekennzeichnet, dass** ein Lagerbock (1) vorgesehen ist, der das Lenkergelenk (11) mittelbar oder unmittelbar trägt und der im ungestörten Fahrbetrieb fest mit der Fahrerkabine (2) verbunden ist.

13. Anordnung nach einem der vorangehenden Ansprüche, **dadurch gekennzeichnet, dass** für die Einstellung der Lenkspindel (5) in der Höhe Einstellmittel (16) für eine Höhenverlagerung eines Lagerbocks (1) vorgesehen sind.

14. Anordnung nach Anspruch 12 oder 13, **dadurch gekennzeichnet, dass** im Falle eines Frontalaufpralles auch der Lagerbock (1) durch Trägheitskräfte in Fahrtrichtung selbsttätig verschiebbar ist.

15. Anordnung nach einem der Ansprüche 1 bis 4, **dadurch gekennzeichnet, dass** der Führungskörper (10) im ungestörten Fahrbetrieb vor der Lenkspindel (5) angeordnet ist, wobei er auf der Führungsfläche (11) derart geführt ist, dass bei Vorwärtsfahrt im Falle eines Frontalaufpralles die Lenkspindel (5) in die Schutzstellung geneigt wird.

16. Anordnung nach Anspruch 15, **dadurch gekennzeichnet, dass** der Führungskörper (10) mit dem oberen Gehäuse (4) verbunden ist.

17. Anordnung nach Anspruch 15, **dadurch gekennzeichnet, dass** die Führungsfläche (11) mit dem oberen Gehäuse (4) verbunden ist.

18. Anordnung nach einem der vorangehenden Ansprüche, **dadurch gekennzeichnet, dass** der Abstand zwischen dem oberen Gehäuse (4) und dem Lenkrad (6) weniger als 20 cm beträgt.
